# EUROPÄISCHE PATENTSCHRIFT

(11) **EP 0 623 982 B1**
(45) Veröffentlichungstag und Bekanntmachung des Hinweises auf die Patenterteilung: **27.11.1996**
(21) Anmeldenummer: 94106267.1
(22) Anmeldetag: 22.04.1994
(51) Int. Cl.: H02G 1/12

(54) **Trenn- und Abisoliereinrichtung für eine Kabelverarbeitungsmaschine**
Cutting and stripping device for a cable processing machine
Dispositif de coupe et de dénudage pour une machine de traitement de câble

(30) Priorität: 06.05.1993 CH 1399/93
(43) Veröffentlichungstag der Anmeldung: 09.11.1994
(73) Patentinhaber: KOMAX HOLDING AG, CH-6045 Meggen (CH)
(72) Erfinder: Koch, Max, CH-6045 Meggen (CH)
(74) Vertreter: Blöchle, Hans

(56) Entgegenhaltungen:
- EP-A- 0 127 330
- EP-A- 0 136 852
- EP-A- 0 234 929
- US-A- 3 909 900

## Beschreibung

Die Erfindung betrifft eine Trenn- und Abisoliereinrichtung für eine Kabelverarbeitungsmaschine, wobei die Einrichtung mindestens ein Messerpaar aufweist, dessen Messer mittels Messerhaltern an Betätigungsgliedern eines Messerantriebes befestigt sind, und dass Abzugsantriebe vorgesehen sind, mit welchen die Kabelenden nach dem Trennen eines Kabels zwecks Abisolierung verschoben werden.

Mit der EP-A 0 509 192 ist eine Einrichtung bekannt geworden, mit der ein elektrisches Kabel bei minimalem Zeitaufwand getrennt und auf verschiedene Längen abisoliert werden kann, ohne dass das Trenn- und Abisolierwerkzeug bei Änderung der Abisolierlänge und/oder des Kabelquerschnittes ausgewechselt werden muss. Zu diesem Zweck sind in zwei Messerhaltern je zwei Abisoliermesser in einem bestimmten, festen Abstand von einem Trennmesser angeordnet. Die Abisoliermesser sind gegenüber den Trennmessern um einen bestimmten Betrag derart verkürzt, dass während eines ersten Teiles des Arbeitshubes eines Messerantriebes nur das Kabel getrennt wird. Danach zieht ein Abzugsantrieb die Kabelenden von der Trennstelle auf die gewünschte Abisolierlänge zurück, worauf während eines zweiten Teiles des Arbeitshubes des Messerantriebes die Isolation eingeschnitten wird. Während einer weiteren, durch den Abzugsantrieb bewirkten Rückzugsbewegung der Kabelenden wird bei geschlossenen Abisoliermessern der Isolationsabfall abgezogen. Diese Einrichtung weist einen relativ komplizierten, unterhalb der Bearbeitungsstelle angeordneten Messerantrieb auf, so dass trotz Abdichtungen Schmutz- und Isolationspartikel bis zu den Zahnrädern des Messerantriebes vordringen und bei längerem Betrieb Probleme verursachen können. Ausserdem können mit dieser Einrichtung nur Abisolierlängen erreicht werden, die innerhalb des bestimmten, festen Abstandes vorstehend beschriebener Messeranordnung liegen.

In einer Druckschrift der Firma Shin Meiwa Industry Co. Ltd., Yokohama/JP, wird eine Trenn- und Abisoliereinrichtung beschrieben, bei der ein Messerpaar vorgesehen ist, das an jedem Messer mehrere Schneiden aufweist. Hierbei erfolgt wie üblich nach dem Kabellängstransport die Trennung der Kabel mit dem Mehrschneidenmesser. Nach der Messeröffnung bewegen sich die Kabelhandlingskomponenten linear und parallel zum Messer über gesteuerte Spindeln nach links und rechts zu einer Abisolierstelle. Anschliessend werden die Handlingskomponenten beidseitig des Messers mit den geschnittenen Kabeln in Richtung Messer auf die geforderte Abisolierlänge verschoben. Danach erfolgt ein Messerhub auf den nötigen Abisolierdurchmesser und der Abzug des Isolationsrestes sowie der lineare Weiter- oder Rücktransport des Kabels je nach Weiterverarbeitung. Ein Nachteil dieser Einrichtung ist darin zu sehen, dass die relativ schweren Kabelhandlingskomponenten ständig in Längs- und Querrichtung linear verschoben werden müssen, was zu höheren Taktzeiten oder höherem Energieverbrauch und Verschleiss führen kann. Ausserdem kann sich die Verwendung von Mehrschneidenmessern wirtschaftlich ungünstig auswirken, da es zu ungleichmässiger Abnutzung kommen kann und sie trotz noch vorhandener brauchbarer Schneiden ausgewechselt werden müssten.

Bei einer ähnlichen, mit der EP-A-0 499 753 bekannt gewordenen Einrichtung, können bei der Verarbeitung von sehr flexiblen Leitern Schwierigkeiten entstehen. Da derartige Leiter, insbesondere wenn bereits Anschlusselemente aufgeklemmt sind, relativ stark durchhängen, können sie beim Weitertransport in Längsrichtung an die Messer anstossen. Um das zu verhindern, sind zwischen den Messern Kabelführungen vorgesehen, wodurch die Einrichtung komplizierter und entsprechend teurer wird.

Der Erfindung liegt die Aufgabe zugrunde eine Einrichtung der eingangs genannten Art vorzuschlagen, die vorstehend erwähnte Nachteile nicht aufweist, wobei insbesondere die Verschmutzung des Messerantriebes und das Verschieben von schweren Kabelhandlingskomponenten vermieden wird.

Diese Aufgabe wird durch die im Patentanspruch 1 gekennzeichnete Erfindung gelöst. Hierbei ist der Messerantrieb oberhalb einer durch das zu verarbeitende Kabel bestimmten Ebene angeordnet, wobei an seinen Betätigungsgliedern zwei Messerpaare nebeneinanderliegend befestigt sind. An einem Maschinengestell ist eine Schwenkeinrichtung ortsfest angeordnet, mittels welcher nach dem Trennen des Kabels mit dem ersten Messerpaar, das eine Kabelende zum zweiten Messerpaar geschwenkt wird, wonach das eine Kabelende mit dem zweiten und das andere Kabelende mit dem ersten Messerpaar abisoliert wird.

Die mit der Erfindung erzielten Vorteile sind darin zu sehen, dass mit der vorgeschlagenen Anordnung des Messerantriebes Verschmutzung und damit Betriebsunterbrüche vermieden werden können. Der Messerantrieb an sich ist einfacher und robuster aufgebaut und somit weniger störanfällig. Durch die nebeneinanderliegenden Messerpaare wird es möglich, die Abisolierlängen in einem weiteren Bereich zu variieren. Da jedes Messer nur eine Schneide aufweist, braucht bei ungleichmässiger Abnutzung nur das betreffende Messer ausgewechselt werden, wodurch gegenüber Mehrschneidenmessern Kosten gespart werden. Ein weiterer Vorteil wird damit erzielt, dass durch die Schwenkeinrichtung das Verschieben von relativ schweren Kabelhandlingskomponenten beim Wechsel vom Trenn- zum Abisoliervorgang vermieden wird. Mit der ferner vorgeschlagenen Kombination von V-Messern und Form-Abisoliermessern kann eine bessere Abisolierqualität erreicht werden. Gemäss einer vorteilhaften Weiterbildung der Einrichtung, werden die beim Abisolieren der Kabel anfallenden Isolationsreste auf einen relativ kleinen Raum konzentriert, so dass sie problemlos abgeführt werden können.

Im folgenden wird die Erfindung anhand zweier auf der Zeichnung dargestellter Ausführungsbeispiele näher erläutert. Es zeigen:
- Fig. 1: eine teilweise geschnittene Ansicht eines Teiles einer Kabelverarbeitungsmaschine mit der erfindungsgemässen Einrichtung in Pfeilrichtung A (Fig. 2) gesehen,
- Fig. 2: einen Grundriss eines Teiles der Kabelverarbeitungsmaschine gemäss Fig. 1,
- Fig. 3: eine Teilansicht eines Messerantriebes der erfindungsgemässen Einrichtung in Pfeilrichtung B (Fig. 1) gesehen,
- Fig. 4: eine Teilansicht einer Variante des Messerantriebes gemäss Fig. 3,
- Fig. 5: einen Schnitt des Messerantriebes gemäss der Linie V-V der Fig. 3,
- Fig. 6a bis 6e: der Messerantrieb in verschiedenen Arbeitsstellungen und die entsprechenden Fertigungszustände des Kabels bzw. der Kabelenden.
- Fig. 7: eine Teilansicht einer weiteren Variante des Messerantriebes,
- Fig. 8: einen Schnitt des Messerantriebes gemäss der Linie VIII - VIII der Fig. 7, und
- Fig. 9a bis 9e: der Messerantrieb gemäss Fig. 7 in verschiedenen Arbeitsstellungen und die entsprechenden Fertigungszustände des Kabels bzw. der Kabelenden.

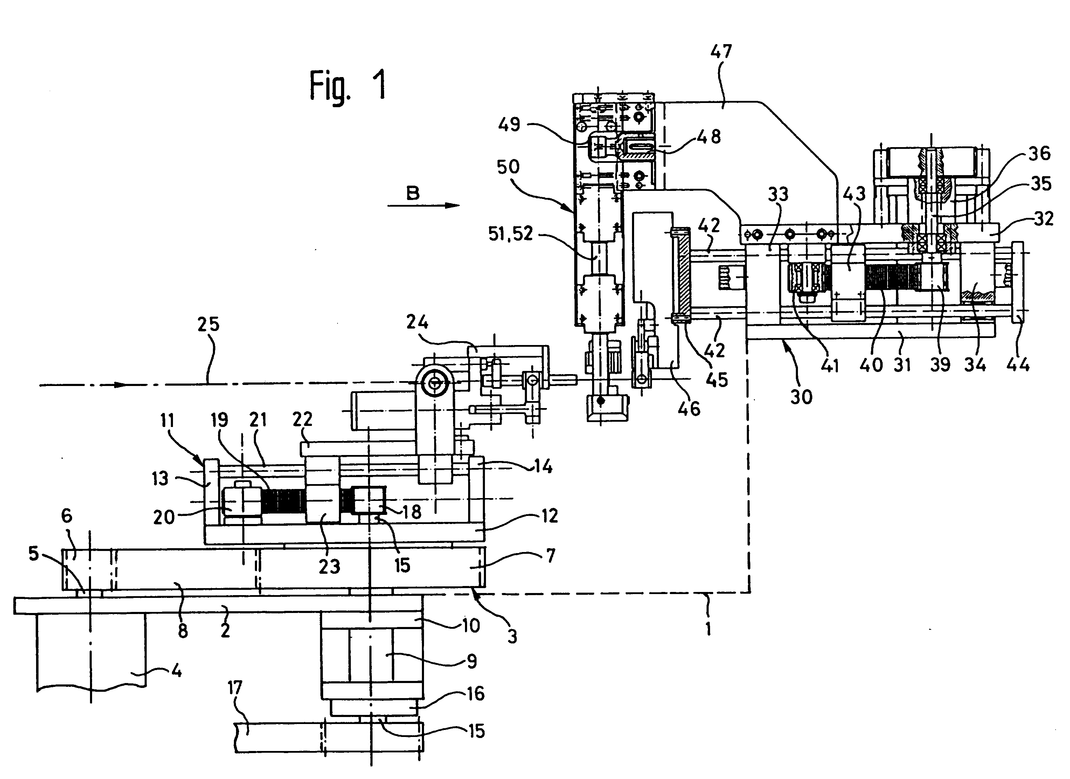

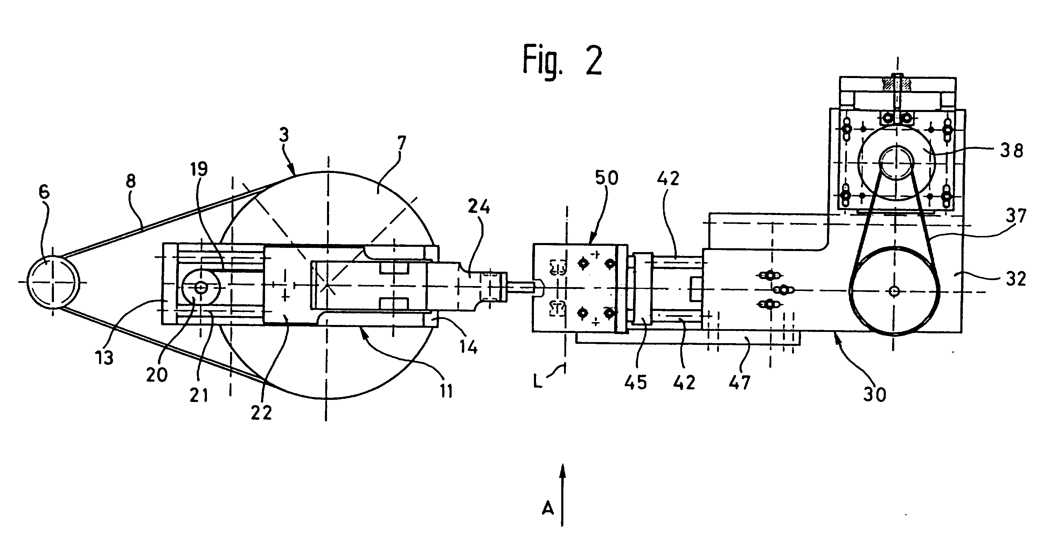

In den Fig. 1 und 2 ist mit 1 ein Maschinengestell einer Kabelverarbeitungsmaschine bezeichnet, dass lediglich durch gestrichelte Linien angedeutet ist. Auf einem mit dem Maschinengestell 1 verbundenem Träger 2 ist eine Schwenkeinrichtung 3 angeordnet, die aus einem Motor 4, einem auf dessen Welle 5 sitzenden ersten Zahnriemenrad 6, einem zweiten, grösseren Zahnriemenrad 7 und einem die beiden Zahnriemenräder 6, 7 verbindenden Zahnriemenrad 8 besteht. Das zweite Zahnriemenrad 7 ist auf einer Hohlwelle 9 befestigt, die in einem mit dem Träger 2 verbundenem Lagerteil 10 gelagert ist. Mit 11 ist ein erster Abzugsantrieb bezeichnet, der eine Grundplatte 12 und eine erste und zweite Seitenplatte 13, 14 aufweist, wobei die Grundplatte 12 auf dem zweiten Zahnriemenrad 7 befestigt ist. Eine durch die Hohlwelle 9 geführte Antriebswelle 15 ist mit ihrem oberen Ende in der Grundplatte 12 und mit ihrem unteren Ende in einem am Lagerteil 10 befestigten Lagerschild 16 gelagert. Die Antriebswelle 15 wird an ihrem unterem Ende mittels eines Zahnriementriebes 17 von einem nicht dargestellten Motor angetrieben. Am oberen Ende der Antriebswelle 15 sitzt ein Zahnriemenrad 18, das über einen Zahnriemen 19 mit einem weiteren, an der Grundplatte 12 gelagerten Zahnriemenrad 20 verbunden ist. An den Seitenplatten 13, 14 sind Führungsstangen 21 befestigt, auf denen ein Support 22 geführt wird, der über einen Mitnehmer 23 mit dem Zahnriemen 19 verbunden ist. Auf dem Support 22 ist eine erste Klemmvorrichtung 24 befestigt, die der Festhaltung eines zu bearbeitenden Kabels 25 dient und beispielsweise pneumatisch betätigt werden kann. Der erste Abzugsantrieb 11 kann mittels eines Rechners gesteuert werden, wobei der Drehwinkel des Zahnriemenrades 18 und damit der Verschiebung des Supports 22 mit der ersten Klemmvorrichtung 24 und dem Kabel 25 durch Programmierung vorgewählt werden kann.

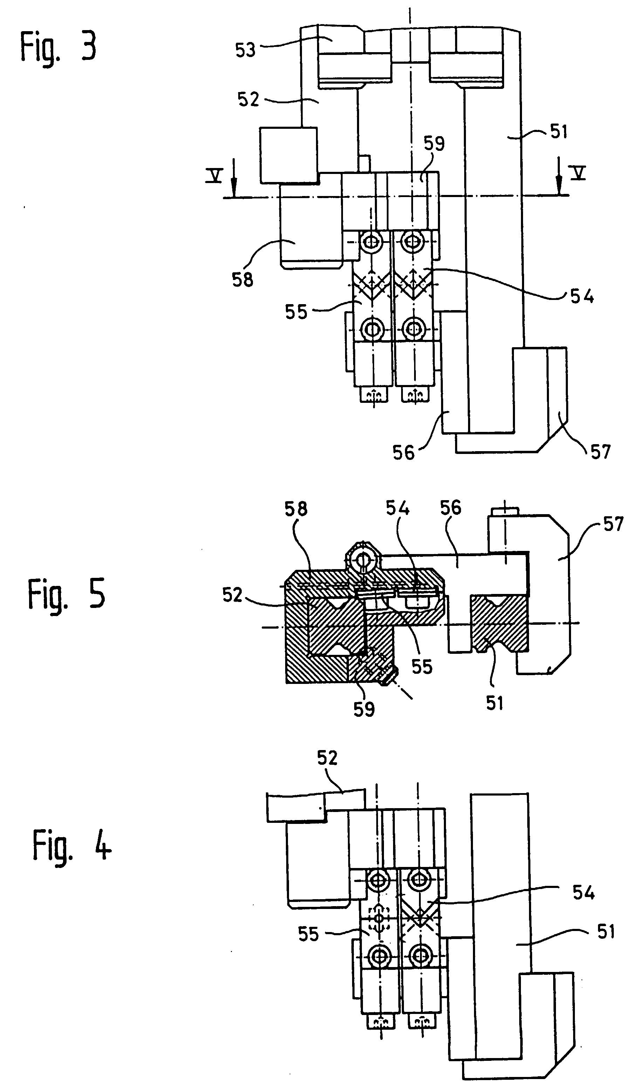

Ein zweiter, auf dem Maschinengestell 1 befestigter Abzugsantrieb 30 weist eine Grundplatte 31 und eine Deckplatte 32 auf, die durch Lagerstücke 32, 34 miteinander verbunden sind. Eine Antriebswelle 35 ist mit ihrem unteren Ende in der Deckplatte 32 und mit ihrem oberen Ende in einer, an der Deckplatte 32 befestigten Lagerbuchse 36 gelagert. Die Antriebswelle 35 wird an ihrem oberen Ende mittels eines Zahnriementriebes 37 von einem Motor 38 angetrieben (Fig. 2). Am unteren Ende der Antriebswelle 35 sitzt ein Zahnriemenrad 39 das über einen Zahnriemen 40 mit einem weiteren, an der Deckplatte 32 gelagerten Zahnriemenrad 41 verbunden ist. In den Lagerstücken 32, 34 sind Führungsstangen 42 verschiebbar gelagert, die mit einem am Zahnriemen 40 befestigten Mitnehmer 43 verbunden sind. An den einen Enden der Führungsstangen 42 ist eine Verbindungsplatte 44 und an den anderen Enden eine Tragplatte 45 befestigt. An der Tragplatte 45 ist eine zweite Klemmvorrichtung 46 angeordnet, die der Festhaltung des abgeschnittenen Kabelendes dient und ebenfalls beispielsweise pneumatisch betätigt werden kann. Der zweite Abzugsantrieb 30 kann in gleicher Weise wie der erste Abzugsantrieb 11 gesteuert werden. An der Deckplatte 32 ist eine Traverse 47 angeschraubt, an welcher ein nachstehend anhand der Fig. 3 und 5 näher beschriebener Messerantrieb 50 derart befestigt ist, dass er sich oberhalb einer durch das zu verarbeitende Kabel 25 bestimmten Ebene befindet. Der Messerantrieb 50 wird mittels eines nicht dargestellten Motors angetrieben, auf dessen Welle 48 ein Ritzel 49 befestigt ist.

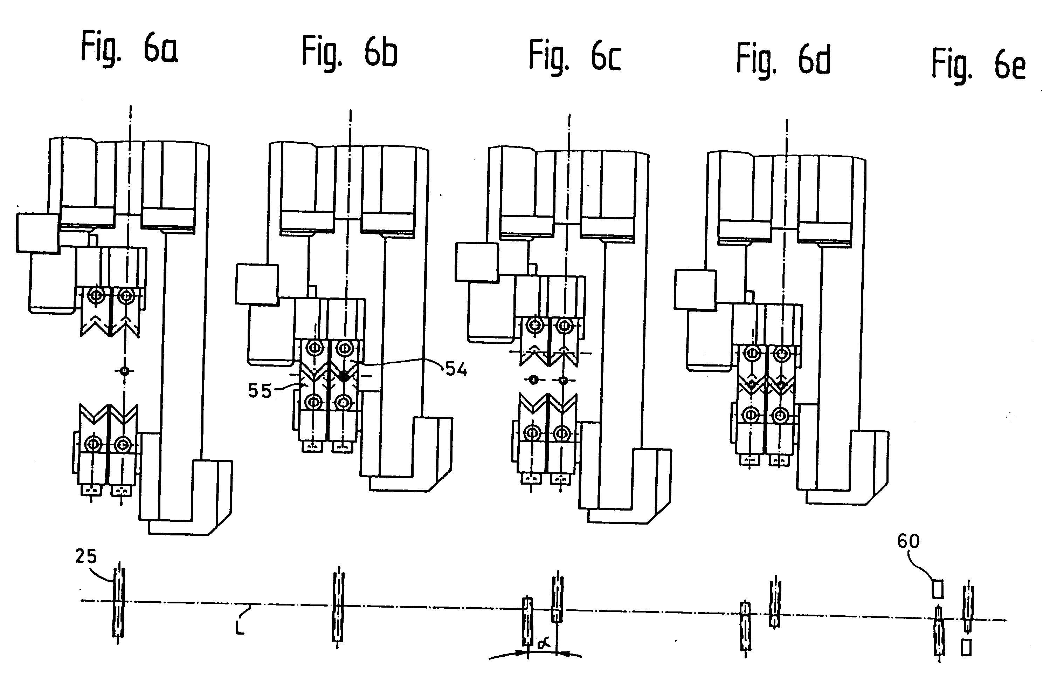

Gemäss Fig. 3 und 5 weist der Messerantrieb 50 zwei Betätigungsglieder 51, 52 in Form von prismatischen Führungsstangen auf, die in einem Führungsgehäuse 53 in senkrechter Richtung verlaufend geführt werden. Die Führungsstangen 51, 52 sind an ihren oberen Enden als Zahnstangen ausgebildet und stehen mit dem Ritzel 49 (Fig. 1) im Eingriff. An den unteren Enden der Führungsstangen 51, 52 sind je zwei Messer von zwei Messerpaaren 54, 55 derart angeordnet, dass sie quer zur Längsrichtung des Kabels seitlich um mindestens eine Messerbreite voneinander versetzt sind und unmittelbar nebeneinander liegen. Die unteren Messer der Messerpaare 54, 55 sind an einem ersten Messerhalter 56 angeschraubt, der mittels eines ersten Klemmstückes 57 an der ersten Führungsstange 51 befestigt ist. Die oberen Messer der Messerpaare 54, 55 sind an einem zweiten Messerhalter 58 angeschraubt, der mittels eines zweiten Klemmstückes 59 an der zweiten Führungsstange 52 befestigt ist. Die Auflageflächen der Messer des zweiten Messerpaares 55 an den Messerhaltern 56, 58 sind gegenüber den Auflageflächen der Messer des ersten Messerpaares 54 derart geneigt, dass beim Schwenken der Schwenkeinrichtung 3 vom ersten zum zweiten Messerpaar, das Kabel senkrecht zu den Messerschneiden verlaufend zugeführt werden kann. Das Ritzel 49 ist zwischen den Führungsstangen 51, 52 angeordnet, so dass bei dessen Drehbewegung die Führungsstangen 51, 52 und mit ihnen die Messer gegenläufig bewegt werden. Um hierbei das etwa vorhandene Zahnspiel aufzuheben, kann auf die Führungsstangen 51, 52 beim Arbeitshub eine kleine Gegenkraft ausgeübt werden, zu welchem Zweck beispielsweise Pneumatikzylinder oder Druckfedern angewendet werden können. Der Messerantrieb 50 kann mittels eines Rechners gesteuert werden, wobei die Zustellbewegung, der Arbeitshub und die Rückstellbewegung der Messer durch Programmierung vorgewählt werden können. Anstelle von zwei Messerpaaren 54, 55 mit einschneidigen V-Messern, (wie in der Fig. 3 und 6 dargestellt) kann das erste Messerpaar 54 aus einschneidigen V-Messern und das zweite Messerpaar 55 aus einschneidigen Form-Abisoliermessern bestehen (Fig. 4), wodurch die Abisolierqualität gesteigert werden kann.

In den Fig. 6a bis 6e wird die Trenn- und Abisolierebene durch eine strichpunktierte Linie L symbolisiert. Mit 60 sind von den Kabelenden abgestreifte Isolationsreste bezeichnet. Das Kabel 25 bzw. die Kabelenden sind gegenüber der Darstellung der Messerpaare um 90° gedreht.

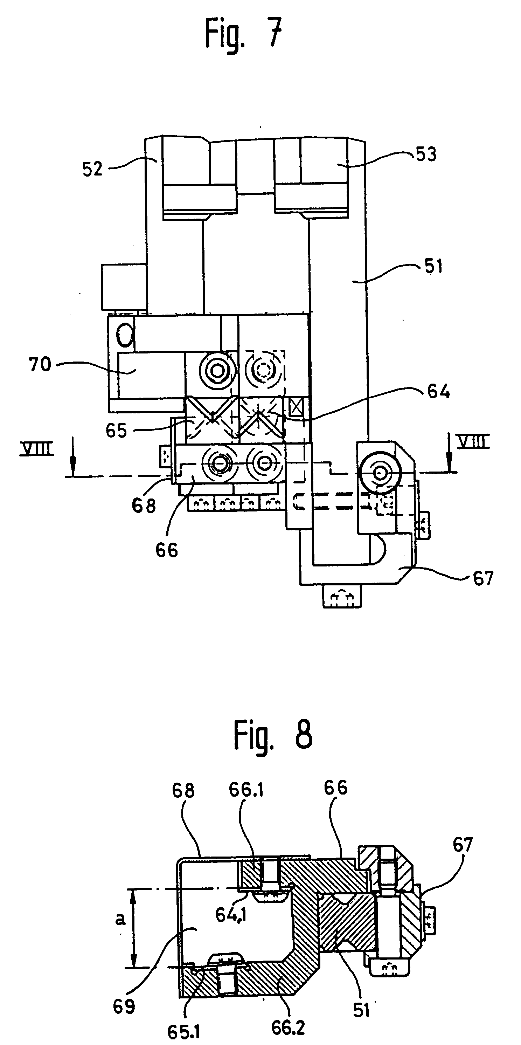

Gemäss Fig. 7 und 8 sind an den unteren Enden der Führungsstangen 51, 52 des Messerantriebes 50 je zwei Messer von zwei Messerpaaren 64, 65 derart angeordnet, dass sie quer zur Längsrichtung des Kabels seitlich und in der Längsrichtung des Kabels in einem Abstand a voneinander versetzt sind. Die unteren Messer 64.1, 65.1 der Messerpaare 64, 65 sind an einem ersten Messerhalter 66 angeschraubt, der mittels einer Klemmvorrichtung 67 an der ersten Führungsstange 51 befestigt ist. Der erste Messerhalter 66 weist einen kurzen und einen langen Schenkel 66.1, 66.2 auf, die parallel im Abstand a zueinander verlaufen. An dem kurzen Schenkel 66.1 ist das untere Messer 64.1 des ersten Messerpaares 64 und am langen Schenkel 66.2 das untere Messer 65.1 des zweiten Messerpaares 65 angeschraubt. An den Schenkeln 66.1, 66.2 ist weiterhin eine winkelförmige Abdeckung 68 befestigt, wodurch eine Einfassung 69 mit im wesentlichen prismatischen Querschnitt gebildet wird. Durch die Einfassung 69 werden die beim Abisolieren der Kabel anfallenden Isolationsreste auf einen relativ kleinen Raum konzentriert und können problemlos abgeführt werden. Die oberen Messer der Messerpaare 64, 65 sind an einem zweiten Messerhalter 70 angeschraubt, der wie nicht weiter dargestellt, an der zweiten Führungsstange 52 angeklemmt ist. Wie bei der Ausführung gemäss Fig. 3 und 5 sind die Auflageflächen der Messer des zweiten Messerpaares 65 gegenüber den Auflageflächen der Messer des ersten Messerpaares 64 derart geneigt, dass beim Schwenken der Schwenkeinrichtung 3 vom ersten zum zweiten Messerpaar, das Kabel senkrecht zu den Messerschneiden verlaufend zugeführt werden kann.

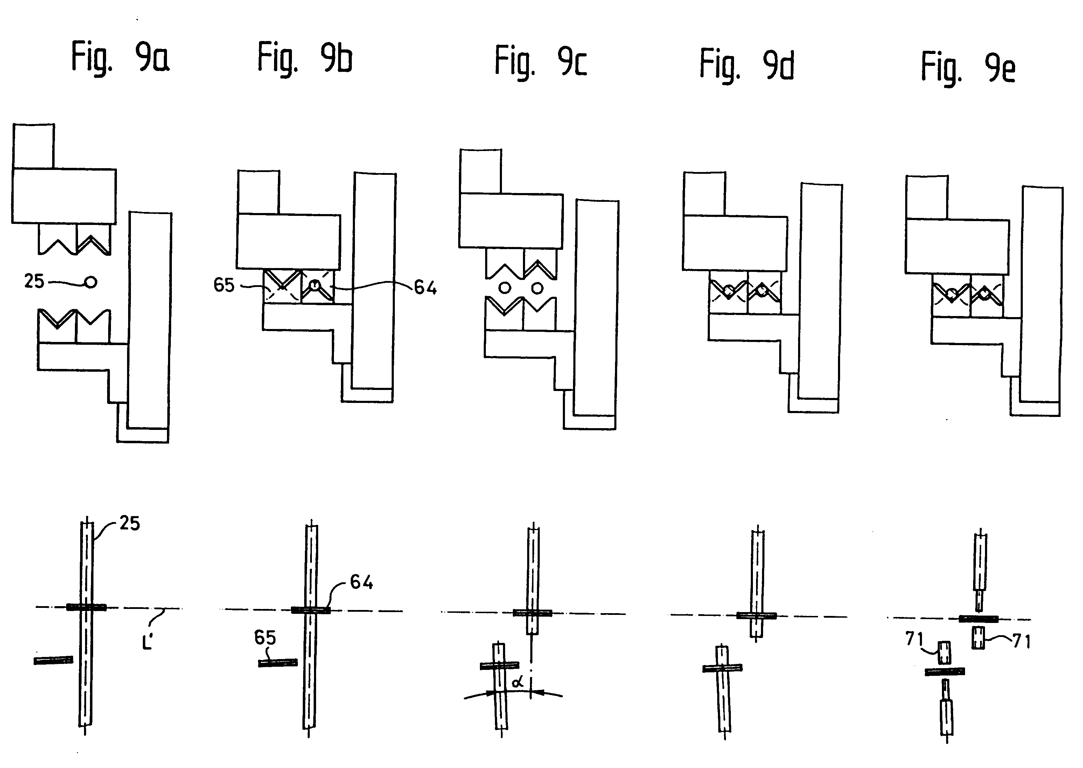

In den Fig. 9a bis 9e wird die Trennebene des Kabels und die Abisolierebene des einen Kabelendes durch eine strichpunktierte Linie L' symbolisiert. Mit 71 sind von den Kabelenden abgestreifte Isolationsreste bezeichnet. Die im Zusammenhang mit der Linie L' dargestellten Kabelenden und Messerpaare 64, 65 sind gegenüber der Darstellung der Messerantriebe um 90° gedreht.

Die vorstehend beschriebene Einrichtung arbeitet wie folgt:

Das Kabel 25 wird in Pfeilrichtung (Fig. 1) um eine bestimmte, vorgewählte Länge zwischen die geöffneten Messer des ersten Messerpaares 54, 64 transportiert (Fig. 6a, 9a) und von den Klemmvorrichtungen 24 und 46 festgehalten. Danach wird das Kabel mit dem ersten Messerpaar 54, 64 getrennt (Fig. 6b, 9b) und beidseitig durch die Abzugsantriebe 11 und 30 um ca. 1 bis 2 mm zurückgezogen. Gleichzeitig mit dem erneutem Öffnen der Messer, welches abhängig von Kabeldurchmesser erfolgt, wird die Schwenkeinrichtung 3 zum zweiten Messerpaar 55, 65 geschwenkt, was entsprechend den gewählten Abmessungen einem Winkel α von ca. 3° entspricht (Fig. 6c, 9c). Das von der zweiten Klemmvorrichtung 46 gehalten Kabelende bleibt hierbei jedoch stationär. Danach werden die Kabelenden mittels der Abzugsantriebe 11 und 30 in Richtung gegen die Messer so weit verschoben, bis die gewünschte Abisolierlänge erreicht ist.

Hierbei erfolgt die Verschiebung gemäss Fig. 6c gegenläufig und gemäss Fig. 9c in gleicher Richtung. Zum Zwecke der Abisolierung erfolgt sodann ein Messerhub auf den erforderlichen Querschnitt (Fig. 6d, 9d) und der Abzug der Isolationsreste (60, 71) durch Rückzugsbewegung der Abzugsantriebe 11 und 30 (Fig. 6e, 9e). Nach der Variante gemäss Fig. 7, 8 werden dabei die Isolationsreste 71 auf einen kleineren Raum konzentriert und können besser abgeführt werden (Fig. 9e).

Bei Verwendung von Messerpaaren gemäss Fig. 4, wird zuerst das von der ersten Klemmvorrichtung 24 gehaltene Kabelende mit den Form-Abisoliermessern, und dann das von der zweiten Klemmvorrichtung 46 gehaltene Kabelende mit den V-Messern abisoliert, wobei der Messerhub verschieden ist.

Es ist auch möglich, dass für beide Messerpaare 54, 55 bzw. 64, 65 einschneidige V-Formmesser verwendet werden.

## Patentansprüche

1. Trenn- und Abisoliereinrichtung für eine Kabelverarbeitungsmaschine, wobei die Einrichtung mindestens ein Messerpaar aufweist, dessen Messer mittels Messerhaltern (56, 58, 66, 70) an Betätigungsgliedern (51, 52) eines Messerantriebes (50) befestigt sind, und dass Abzugsantriebe (11, 30) vorgesehen sind, mit welchen die Kabelenden nach dem Trennen eines Kabels (25) zwecks Abisolierung verschoben werden,
dadurch gekennzeichnet,
- dass der Messerantrieb (50) oberhalb einer durch das zu verarbeitende Kabel (25) bestimmten Ebene angeordnet ist,
- dass zwei Messerpaare (54, 55, 64, 65) vorgesehen sind, deren Messer quer zur Längsrichtung des Kabels (25) seitlich voneinander versetzt an den Messerhaltern (56, 58, 66, 70) befestigt sind,
- dass eine ortsfest an einem Maschinengestell (1) angeordnete Schwenkeinrichtung (3) vorgesehen ist, mittels welcher nach dem Trennen des Kabels (25) mit dem ersten Messerpaar (54, 64), das eine Kabelende zum zweiten Messerpaar (55, 65) geschwenkt wird, und
- dass das eine Kabelende mit dem zweiten (55, 65) und das andere Kabelende mit dem ersten Messerpaar (54, 64) abisoliert wird.

2. Trenn- und Abisoliereinrichtung nach Patentanspruch 1,
dadurch gekennzeichnet,
dass die Messer unmittelbar nebeneinanderliegend an den Messerhaltern (56, 58) befestigt sind.

3. Trenn- und Abisoliereinrichtung nach Patentanspruch 1,
dadurch gekennzeichnet,
dass die Messer in der Längsrichtung des Kabels (25) in einem Abstand (a) voneinander versetzt an den Messerhaltern (66, 70) befestigt sind.

4. Trenn- und Abisoliereinrichtung, nach Patentanspruch 1,
dadurch gekennzeichnet,
dass ein erster Abzugsantrieb (11) an der Schwenkeinrichtung (3) und ein zweiter Abzugsantrieb (30) am Maschinengestell (1) befestigt ist.

5. Trenn- und Abisoliereinrichtung nach Patentanspruch 4, wobei die Schwenkeinrichtung (3) ein Zahnriemenrad (7) aufweist, das auf einer Hohlwelle (9) befestigt ist, welche in einem mit dem Maschinengestell (1) verbundenen Lagerteil (10) gelagert ist, und wobei der erste Abzugsantrieb (11) mit einer Grundplatte (12) auf dem Zahnriemenrad (7) befestigt ist,
dadurch gekennzeichnet,
- dass eine durch die Hohlwelle (9) geführte Antriebswelle (15) des ersten Abzugsantriebes (11) mit ihrem oberen Ende in der Grundplatte (12) gelagert ist,
- dass am oberen Ende der Antriebswelle (15) ein Zahnriemenrad (18) sitzt, das über einen Zahnriemen (19) mit einem weiteren, an der Grundplatte (12) gelagerten Zahnriemenrad (20) verbunden ist,
- dass an mit der Grundplatte (12) verbundenen Seitenplatten (13, 14) Führungsstangen (21) befestigt sind, auf denen ein Support (22) geführt wird, der über einen Mitnehmer (23) mit dem Zahnriemen (19) verbunden ist, und
- dass auf dem Support (22) eine erste Klemmvorrichtung (24) für die Festhaltung des Kabels (25) befestigt ist.

6. Trenn- und Abisoliereinrichtung nach Patentanspruch 4,
dadurch gekennzeichnet,
- dass der zweite Abzugsantrieb (30) eine Grundplatte (31) und eine Deckplatte (32) aufweist, die durch Lagerstücke (33, 34) miteinander verbunden sind,
- dass eine Antriebswelle (35) mit ihrem unteren Ende in der Deckplatte (32) gelagert ist und ein Zahnriemenrad (39) trägt, das über einen Zahnriemen (40) mit einem weiteren, an der Deckplatte (32) gelagertem Zahnriemenrad (41) verbunden ist,
- dass in den Lagerstücken (33, 34) Führungsstangen (42) verschiebbar gelagert sind, die mit einem am Zahnriemen (40) befestigten Mitnehmer (43) verbunden sind, wobei an den einen Enden der Führungsstangen (42) eine Verbindungsplatte (44) und an den anderen Enden eine Tragplatte (45) befestigt ist, und
- dass an der Tragplatte (45) eine zweite Klemmvorrichtung (46) für die Festhaltung des abgeschnittenen Kabelendes angeordnet ist.

7. Trenn- und Abisoliereinrichtung nach Patentanspruch 1,
dadurch gekennzeichnet,
- dass die Betätigungsglieder (51, 52) prismatische Führungsstangen sind, die in einem Führungsgehäuse (53) in senkrechter Richtung verlaufend geführt werden,
- dass die Führungsstangen (51, 52) an ihren oberen Enden als Zahnstangen ausgebildet sind und mit dem Ritzel (49) eines Motors im Eingriff stehen,
- dass die unteren Messer der Messerpaare (54, 55, 64, 65) mittels eines ersten Messerhalters (56, 66) am unteren Ende der ersten Führungsstange (51) befestigt sind, und
- dass die oberen Messer der Messerpaare (54, 55, 64, 65) mittels eines zweiten Messerhalters (58, 70) am unteren Ende der zweiten Führungsstange (52) befestigt sind.

8. Trenn- und Abisoliereinrichtung nach den Patentansprüchen 3 und 7,
dadurch gekennzeichnet,
- dass der erste Messerhalter (66) einen kurzen und einen langen Schenkel (66.1, 66.2) aufweist, die parallel im Abstand (a) zueinander verlaufen,
- dass am kurzen Schenkel (66.1) das untere Messer (64.1) des ersten Messerpaares (64) und am langen Schenkel (66.2) das untere Messer (65.1) des zweiten Messerpaares (65) angeschraubt ist, und
- dass an den Schenkeln (66.1, 66.2) eine winkelförmige Abdeckung (68) befestigt ist, wodurch eine Einfassung (69) mit im wesentlichen prismatischen Querschnitt gebildet wird.

9. Trenn- und Abisoliereinrichtung nach Patentanspruch 7,
dadurch gekennzeichnet,
dass beide Messerpaare (54, 55, 64, 65) aus einschneidigen V-Messern oder V-Formmessern bestehen.

10. Trenn- und Abisoliereinrichtung nach Patentanspruch 7,
dadurch gekennzeichnet,
dass das erste Messerpaar (54, 64) aus einschneidigen V-Messern und das zweite Messerpaar (55, 65) aus einschneidigen Form-Abisoliermessern besteht.

## Claims

1. Severing and insulation-stripping equipment for a cable-processing machine, wherein the equipment comprises at least one pair of blades, which are fastened by means of blade holders (56, 58, 66, 70) at actuating members (51, 52) of a blade drive (50), and take-off drives (11, 30) are provided, by which the cable ends are displaced for the purpose of insulation-stripping after the severing of a cable (25), characterised thereby,
- that the blade drive (50) is arranged above a plane determined by the cable (25) to be processed,
- that two blade pairs (54, 55, 64, 65) are provided, the blades of which are fastened transversely to the longitudinal direction of the cable (25) and laterally displaced one from the other at the blade rollers (56, 58, 66, 70),
- that a pivoting equipment (3), which is arranged in fixed location at a machine frame (1) and by means of which - after the severing of the cable (25) by the first blade pair (54, 64) - the one cable end is pivoted towards the second blade pair (55, 65) and
- that the one cable end is stripped by the second blade pair (55, 65) and the other cable end by the first blade pair (54, 64).

2. Severing and insulation-stripping equipment according to claim 1, characterised thereby, that the blades are fastened one lying directly beside the other at the blade holders (56, 58).

3. Severing and insulation-stripping equipment according to claim 1, characterised thereby, that the blades are fastened one displaced from the other by a spacing (a) in the longitudinal direction of the cable (25) at the blade holders (66, 70).

4. Severing and insulation-stripping equipment according to claim 1, characterised thereby, that a first take-off drive (11) is fastened at the pivoting equipment (3) and a second take-off drive (30) at the machine frame (1).

5. Severing and insulation-stripping equipment according to claim 4, wherein the pivoting equipment (3) comprises a toothed belt wheel (7), which is fastened on a hollow shaft (9), which is borne in a bearing part (10) connected with the machine frame (1), and wherein the first take-off drive (11) is fastened by a base plate (12) on the toothed belt wheel (7), characterised thereby,
- that a drive shaft (15), which is led through the hollow shaft (9), of the first take-off drive (11) is borne by its upper end in the base plate (12),
- that a toothed belt wheel (18), which is connected by way of a toothed belt (19) with a further toothed belt wheel (20), which is borne at the base plate (12), sits at the upper end of the drive shaft (15),
- that guide rods (21), on which a support (22) is guided, which is connected by way of an entraining member (23) with the toothed belt (19),are fastened at side plates (13, 14) connected with the base plate (12) and
- that a first clamping device (24) for the retention of the base plate (12) is fastened on the support (22).

6. Severing and insulation-stripping equipment according to claim 4, characterised thereby,
- that the second take-off drive (30) comprises a base plate (31) and a cover plate (32), which are connected each with the other by bearing members (33, 34),
- that a drive shaft (35) is borne by its lower end in the cover plate (32) and carries a toothed belt wheel (39), which is connected by way of a toothed belt (40) with a further toothed belt wheel (41), which is borne at the cover plate (32),
- that guide rods (42), which are connected with an entraining member (43) fastened at the toothed belt (40), are borne to be displaceable in the bearing members (33, 34), wherein a connecting plate (44) is fastened at the one ends of the guide rods (42) and a carrier plate (45) at the other ends, and
- that a second clamping device (46) for the retention of the severed cable end is arranged at the carrier plate (45).

7. Severing and insulation-stripping equipment according to claim 1, characterised thereby,
- that the actuating members (51, 52) are prismatic guide rods which are guided to extend in vertical direction in a guide housing (53),
- that the guide rods (51, 52) are formed as toothed racks at their upper ends and stand in engagement with the pinion (49) of a motor,
- that the lower blades of the blade pairs (54, 55, 64, 65) are fastened at the lower end of the first guide rod (51) by means of a first blade holder (56, 66) and
- that the upper blades of the blade pairs (54, 55, 64, 65) are fastened at the lower end of the second guide rod (52) by means of a second blade holder (58, 70).

8. Severing and insulation-stripping equipment according to the claims 3 and 7, characterised thereby,
- that the first blade holder (66) comprises a short limb (66.1) and a long limb (66.2), which limbs each extend parallelly to the other at a spacing (a),
- that the lower blade (64.1) of the first blade pair (64) is screwed to the short limb (66.1) and the lower blade (65.1) of the second blade pair (65) is screwed to the long limb (66.2),
- that an angular cover (68) is fastened at the limbs (66.1, 66.2), whereby an enclosure (69) of substantially prisimatic cross-section is formed.

9. Severing and insulation-stripping equipment according to claim 7, characterised thereby, that both blade pairs (54, 55, 64, 65) consist of single-edged V-blades or V-shaped blades.

10. Severing and insulation-stripping equipment according to claim 7, characterised thereby, that the first blade pair (54, 64) consists of single-edged V-blades and the second blade pair (55, 65) consists of single-edged shaped insulation-stripping blades.

## Revendications

1. Dispositif de séparation et de dénudage de câbles pour une machine de traitement de câbles, étant précisé que le dispositif comporte une paire de couteaux qui sont fixés à des organes d'actionnement (51, 52) d'un entraînement de couteaux (50) grâce à des porte-couteaux (56, 58, 66, 70), et qu'il est prévu des entraînements d'enlèvement (11, 30) grâce auxquels les extrémités de câbles sont déplacées en vue du dénudage, après la séparation d'un câble (25), caractérisé
- en ce que l'entraînement de couteaux (50) est disposé au-dessus d'un plan défini par le câble à traiter (25),
- en ce qu'il est prévu deux paires de couteaux (54, 55, 64, 65) dont les couteaux sont fixés aux porte-couteaux (56, 58, 66, 70) en étant décalés latéralement l'un par rapport à l'autre, transversalement au sens longitudinal du câble (25),
- en ce qu'il est prévu un dispositif pivotant (3) qui est disposé, stationnaire, sur un bâti de machine (1) et grâce auquel, après la séparation du câble (25) à l'aide de la première paire de couteaux (54, 64), une extrémité de câble pivote vers la seconde paire de couteaux (55, 65), et
- en ce qu'une extrémité de câble est dénudée à l'aide de la seconde paire de couteaux (55, 65) tandis que l'autre extrémité de câble est dénudée à l'aide de la première paire (54, 64).

2. Dispositif de séparation et de dénudage selon la revendication 1, caractérisé en ce que les couteaux sont fixés tout près l'un de l'autre aux porte-couteaux (56, 58).

3. Dispositif de séparation et de dénudage selon la revendication 1, caractérisé en ce que les couteaux sont fixés aux porte-couteaux (66, 70) en étant décalés l'un par rapport à l'autre suivant un écartement (a) dans le sens longitudinal du câble (25).

4. Dispositif de séparation et de dénudage selon la revendication 1, caractérisé en ce qu'un premier dispositif d'enlèvement (11) est fixé au dispositif pivotant (3) tandis qu'un second entraînement d'enlèvement (30) est fixé au bâti de machine (1).

5. Dispositif de séparation et de dénudage selon la revendication 4, dans lequel le dispositif pivotant (3) comporte une roue pour courroie dentée (7) fixée sur un arbre creux (9) qui est monté dans un élément formant palier (10) relié au bâti de machine (1), et le premier entraînement d'enlèvement (11) est fixé avec une plaque de base (12) sur la roue pour courroie dentée (7), caractérisé
- en ce qu'un arbre d'entraînement (15) du premier entraînement d'enlèvement (11) qui traverse l'arbre creux (9) est monté avec son extrémité supérieure dans la plaque de base (12),
- en ce qu'il est prévu sur l'extrémité supérieure de l'arbre d'entraînement (15) une roue pour courroie dentée (18) qui est reliée par une courroie dentée (19) à une autre roue pour courroie dentée (20) montée sur la plaque de base (12),
- en ce qu'il est prévu des barres de guidage (21) qui sont fixées à des plaques latérales (13, 14) reliées à la plaque de base (12) et sur lesquelles est guidé un support (22) relié à la courroie dentée (19) par un organe d'entraînement (23), et
- en ce qu'un premier dispositif de serrage (24) destiné à immobiliser le câble (25) est fixé sur le support (22).

6. Dispositif de séparation et de dénudage selon la revendication 4, caractérisé
- en ce que le second entraînement d'enlèvement (30) comprend une plaque de base (31) et une plaque de recouvrement (32) qui sont reliées par des pièces formant paliers (33, 34),
- en ce qu'un arbre d'entraînement (35) est monté avec son extrémité inférieure dans la plaque de recouvrement (32) et porte une roue pour courroie dentée (39) qui est reliée par une courroie dentée (40) à une autre roue pour courroie dentée (41) montée sur la plaque de recouvrement (32),
- en ce qu'il est prévu des barres de guidage (42) qui sont montées mobiles dans les pièces formant paliers (33, 34) et qui sont reliées à un organe d'entraînement (43) fixé à la courroie dentée (40), une plaque de liaison (44) étant fixée à une extrémité des barres de guidage (42) tandis qu'une plaque d'appui (45) est fixée à l'autre extrémité, et
- en ce qu'il est prévu sur la plaque d'appui (45) un second dispositif de serrage (46) pour immobiliser l'extrémité de câble coupée.

7. Dispositif de séparation et de dénudage selon la revendication 1, caractérisé
- en ce que les organes d'actionnement (51, 52) sont des barres de guidage prismatiques qui sont guidées dans le sens vertical dans un carter de guidage (53),
- en ce que les barres de guidage (51, 52) sont conçues à leur extrémité supérieure comme des crémaillères et sont en prise avec le pignon (49) d'un moteur,
- en ce que les couteaux inférieurs des paires (54, 55, 64, 65) sont fixés à l'extrémité inférieure de la première barre de guidage (51) à l'aide d'un premier porte-couteaux (56, 66), et
- en ce que les couteaux supérieurs des paires (54, 55, 64, 65) sont fixés à l'extrémité inférieure de la seconde barre de guidage (52) à l'aide d'un second porte-couteaux (58, 70).

8. Dispositif de séparation et de dénudage selon les revendications 3 et 7, caractérisé
- en ce que le premier porte-couteaux (66) comprend des branches courte et longue (66.1, 66.2) qui sont parallèles suivant un écartement (a),
- en ce que le couteau inférieur (64.1) de la première paire (64) est vissé à la branche courte (66.1) tandis que le couteau inférieur (65.1) de la seconde paire (65) est vissé à la branche longue (66.2), et
- en ce qu'un recouvrement coudé (68) est fixé aux branches (66.1, 66.2), formant ainsi une enceinte (69) à section globalement prismatique.

9. Dispositif de séparation et de dénudage selon la revendication 7, caractérisé en ce que les deux paires de couteaux (54, 55, 64, 65) se composent de couteaux en V ou de couteaux profilés en V à un seul tranchant.

10. Dispositif de séparation et de dénudage selon la revendication 7, caractérisé en ce que la première paire de couteaux (54, 64) se compose de couteaux en V à un seul tranchant tandis que la seconde paire (55, 65) se compose de couteaux de dénudage profilés à un seul tranchant.
